# EUROPEAN PATENT APPLICATION

(11) **EP 4 714 826 A1**
(43) Date of publication of application: **25.03.2026**
(21) Application number: 25203495.4
(22) Date of filing: 19.09.2025
(51) Int. Cl.: B64D 27/02, B64D 27/33, B64D 31/18, B64D 35/022, B64C 27/20, B64C 27/26

(54) **HYBRID ELECTRIC PROPULSION SYSTEM FOR AIRCRAFT**

(30) Priority: 19.09.2024 US 202463696704 P
(71) Applicant: PRATT & WHITNEY CANADA CORP., Longueuil, Québec J4G 1A1 (CA)
(72) Inventor: LABRECQUE, Michel, (01BE5) Longueuil, J4G 1A1 (CA)
(74) Representative: Dehns

(57) **Abstract**

A propulsion system (20) for an aircraft includes a propulsion rotor, and at least one engine (22) mechanically coupled to the propulsion rotor via a geartrain (60). The propulsion system (20) also includes a first propulsor module (24) having a first housing, a first electric motor (112), and a first bladed propulsor. The first bladed propulsor is coupled with the first electric motor (112) within the first housing. The propulsion system (20) further includes a second propulsor module having a second housing, a second electric motor, and a second bladed propulsor. The second bladed propulsor is coupled with the second electric motor within the second housing. The propulsion system (20) also includes a first generator (82) driven by the at least one engine (22) and electrically connected with the first electric motor (112). Additionally, the propulsion system (20) includes a second generator driven by the at least one engine (22) and electrically connected with the second electric motor.

## Description

### TECHNICAL FIELD

This disclosure relates generally to hybrid-electric propulsion systems for aircraft, more particularly, to a hybrid-electric propulsion system for a compound helicopter.

### BACKGROUND OF THE ART

Hybrid-electric propulsion systems for an aircraft may typically include an electric motor configured to supplement or replace a propulsion system engine (e.g., a gas turbine engine). Various hybrid-electric propulsion system configurations are known. While these known propulsion system configurations may be suitable for their intended purposes, there is always room in the art for improvement.

### SUMMARY

According to an aspect of the present invention, a propulsion system for an aircraft is provided. The propulsion system includes a propulsion rotor, and at least one engine mechanically coupled to the propulsion rotor via a geartrain. The propulsion system also includes a first propulsor module having a first housing, a first electric motor, and a first bladed propulsor. The first bladed propulsor is coupled with the first electric motor within the first housing. The propulsion system further includes a second propulsor module having a second housing, a second electric motor, and a second bladed propulsor. The second bladed propulsor is coupled with the second electric motor within the second housing. The propulsion system also includes a first generator driven by the at least one engine and electrically connected with the first electric motor. Additionally, the propulsion system includes a second generator driven by the at least one engine and electrically connected with the second electric motor.

In any of the aspects or embodiments described above and herein, the first housing may form a first propulsor duct including a first duct inlet and a first duct outlet. The second housing may form a second propulsor duct including a second duct inlet and a second duct outlet.

In any of the aspects or embodiments described above and herein, the at least one engine may include a first engine coupled to the geartrain via a first shaft, and a second engine coupled to the geartrain via a second shaft.

In any of the aspects or embodiments described above and herein, the first engine may drive the first generator, and the second engine may drive the second generator.

In any of the aspects or embodiments described above and herein, the first generator and the second generator may be coupled to a gear assembly of the geartrain.

In any of the aspects or embodiments described above and herein, the first generator and the second generator may be mounted on a gearbox housing of the gear assembly.

In any of the aspects or embodiments described above and herein, the first engine may include a first exhaust section, and the second engine may include a second exhaust section. The first generator may be coupled to the first engine at the first exhaust section, and the second generator may be coupled to the second engine at the second exhaust section.

In any of the aspects or embodiments described above and herein, the first generator may be mounted to the first shaft of the first engine, and the second generator may be mounted to the second shaft of the second engine.

In any of the aspects or embodiments described above and herein, the first exhaust section may include a first pair of exhaust ports disposed on opposing lateral sides of the first generator. The second exhaust section may include a second pair of exhaust ports disposed on opposing lateral sides of the second generator.

In any of the aspects or embodiments described above and herein, the first exhaust section may include a first exhaust port, and the first generator may be disposed within the first exhaust port. The second exhaust section may include a second exhaust port, and the second generator may be disposed within the second exhaust port.

In any of the aspects or embodiments described above and herein, the first exhaust port and the second exhaust port may be oriented in a same vertical direction. The first exhaust port and the second exhaust port may be oriented in opposing lateral directions.

According to another aspect of the present invention, a propulsion system for an aircraft is provided. The propulsion system includes a propulsion rotor and a first engine mechanically coupled to the propulsion rotor via a geartrain. The propulsion system also includes a second engine mechanically coupled to the propulsion rotor via the geartrain. The propulsion system further includes a first propulsor module having a first bladed propulsor and a first electric motor. The first bladed propulsor is coupled to the first electric motor. The propulsion system also includes a second propulsor module having a second bladed propulsor and a second electric motor. The second bladed propulsor is coupled to the second electric motor. Additionally, the propulsion system includes a first generator driven by the first engine and electrically connected with the first electric motor. Further, the propulsion system includes a second generator driven by the second engine and electrically connected with the second electric motor.

In any of the aspects or embodiments described above and herein, the first propulsor module may further include a first housing that forms a first propulsor duct having a first duct inlet and a first duct outlet. The first bladed propulsor and the first electric motor may be disposed within the first propulsor duct. The second propulsor module may further include a second housing that forms a second propulsor duct having a second duct inlet and a second duct outlet. The second bladed propulsor and the second electric motor may be disposed within the second propulsor duct.

In any of the aspects or embodiments described above and herein, the first engine may be coupled to the geartrain via a first shaft, and the second engine may be coupled to the geartrain via a second shaft.

In any of the aspects or embodiments described above and herein, the first generator and the second generator may be coupled to a gear assembly of the geartrain. The first generator and the second generator may be mounted on a gearbox housing of the gear assembly.

In any of the aspects or embodiments described above and herein, the first engine may include a first exhaust section, and the second engine may include a second exhaust section. The first generator may be mounted to the first shaft at the first exhaust section, and the second generator may be mounted to the second shaft at the second exhaust section.

In any of the aspects or embodiments described above and herein, the first exhaust section may include a first pair of exhaust ports disposed on opposing lateral sides of the first generator. The second exhaust section may include a second pair of exhaust ports disposed on opposing lateral sides of the second generator.

In any of the aspects or embodiments described above and herein, the first exhaust section may include a first exhaust port, and the first generator may be disposed within the first exhaust port. The second exhaust section may include a second exhaust port, and the second generator may be disposed within the second exhaust port.

In any of the aspects or embodiments described above and herein, the first exhaust port and the second exhaust port may be oriented in a same vertical direction, or the first exhaust port and the second exhaust port may be oriented in opposing lateral directions.

According to another aspect of the present invention, a propulsion system for an aircraft is provided. The propulsion system includes a propulsion rotor. The propulsion system also includes a first engine and a second engine mechanically coupled to the propulsion rotor. The propulsion system further includes a first ducted propulsor module disposed on a first wing of the aircraft, and a second ducted propulsor module disposed on a second wing of the aircraft. The first wing and the second wing are disposed on opposing sides of the aircraft. The propulsion system also includes a first generator driven by the first engine and electrically connected with the first ducted propulsor module. Additionally, the propulsion system includes a second generator driven by the second engine and electrically connected with the second ducted propulsor module.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 schematically illustrates an aircraft including a propulsion system, in accordance with one or more embodiments of the present disclosure.
FIG. 2 schematically illustrates a portion of the propulsion system including a cutaway, side view of a gas turbine engine, in accordance with one or more embodiments of the present disclosure.
FIGS. 3A and 3B schematically illustrate cutaway, side views of propulsor modules of the propulsion system, in accordance with one or more embodiments of the present disclosure.
FIG. 4 illustrates a graph depicting an exemplary relationship between propulsion system output power and specific fuel consumption (SFC), in accordance with one or more embodiments of the present disclosure.
FIG. 5 schematically illustrates a first generator mounting configuration for a dual-engine propulsion system, in accordance with one or more embodiments of the present disclosure.
FIG. 6 schematically illustrates a second generator mounting configuration for the dual-engine propulsion system, in accordance with one or more embodiments of the present disclosure.
FIG. 7A schematically illustrates a perspective view of a first exhaust mounted generator configuration, in accordance with one or more embodiments of the present disclosure.
FIG. 7B schematically illustrates a perspective view of a second exhaust mounted generator configuration, in accordance with one or more embodiments of the present disclosure.

### DETAILED DESCRIPTION

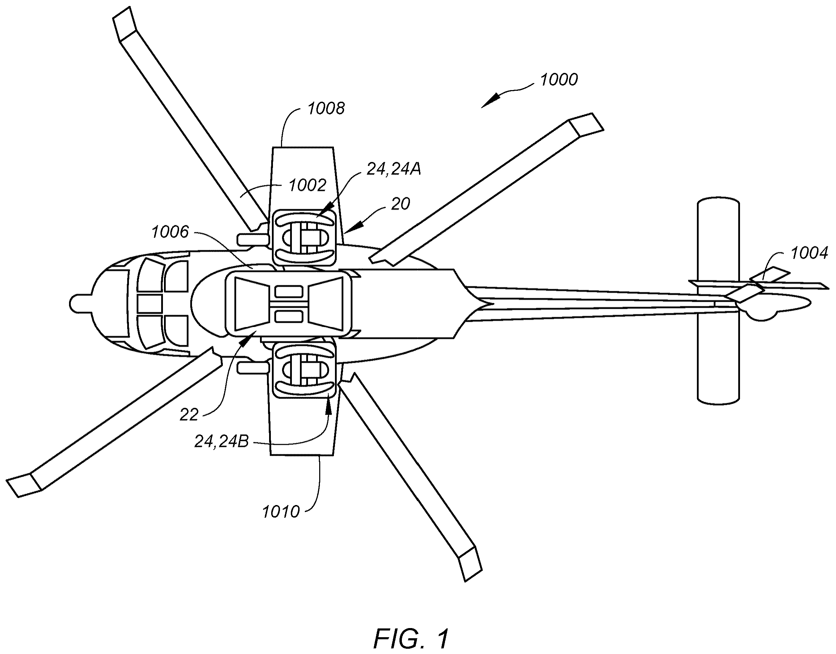

FIG. 1 illustrates an aircraft 1000 including a propulsion system 20. The aircraft 1000 of FIG. 1 is configured as a rotorcraft (e.g., a helicopter). The present disclosure, however, is also applicable to other configurations of aircraft such as, but not limited to, a fixed-wing aircraft (e.g., an airplane), a tilt-rotor aircraft, a tilt-wing aircraft, or another aerial vehicle. The propulsion system 20 of FIG. 1 is configured to drive rotation of propulsion rotors, such as a main rotor 1002 and a tail rotor 1004 of the aircraft 1000, to facilitate propulsion for the aircraft 1000. The propulsion system 20 includes at least one gas turbine engine 22 and at least one ducted propulsor module 24. For example, the propulsion system 20 of FIG. 1 includes a first ducted propulsor module 24A disposed on a first stub-wing 1008 and a second ducted propulsor module 24B disposed on a second stub-wing 1010. The present disclosure, however, is not limited to any particular quantity of the propulsor module(s) 24. The aircraft 1000 of FIG. 1 further includes a housing 1006 (e.g., a nacelle, a fuselage, etc.) enclosing and forming a protective outer covering for the gas turbine engine 22.

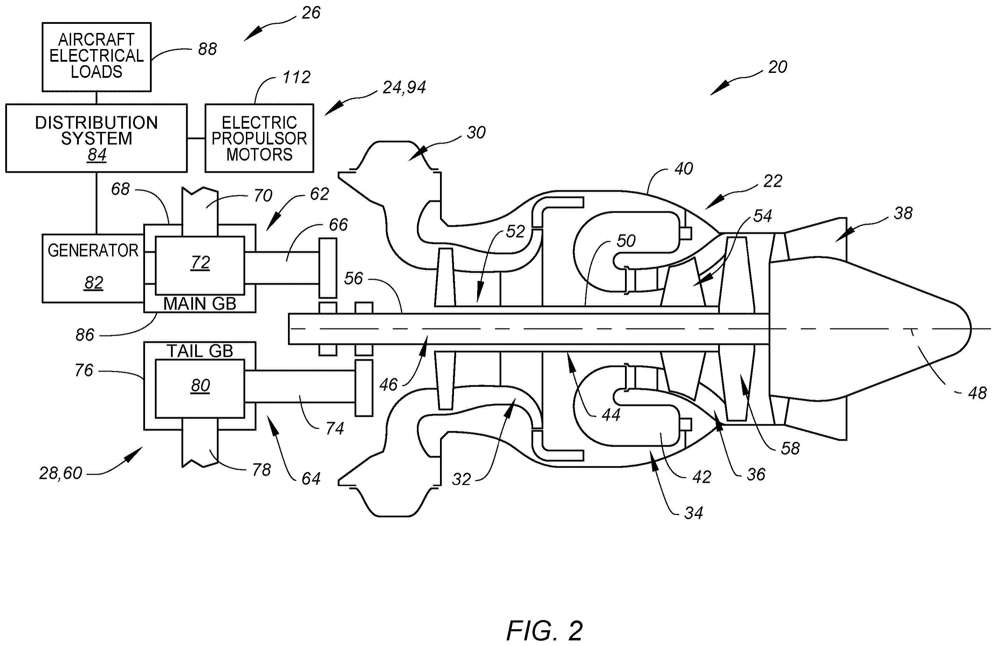

FIG. 2 schematically illustrates the propulsion system 20 and its gas turbine engine 22. As shown in FIG. 2, the propulsion system 20 further includes an electrical assembly 26. The at least one gas turbine engine 22 of FIG. 2 is configured as a turboshaft gas turbine engine configured to mechanically drive rotation of the main rotor 1002 and the tail rotor 1004 (see FIG. 1) through a drivetrain 28. It is contemplated, however, that the present disclosure may also be applied to other gas turbine engine configurations (e.g., a turboprop engine, a turbofan engine, etc.) arranged to mechanically drive a propulsion rotor (e.g., a propeller, a fan, etc.).

The at least one gas turbine engine 22 of FIG. 2 includes an air intake section 30, a compressor section 32, a combustor section 34, a turbine section 36, an exhaust section 38, and an engine static structure 40. The combustor section 34 includes a combustor 42 (e.g., an annular combustor). The turbine section 36 includes a high-pressure turbine section and a power turbine section.

Components of the compressor section 32 and/or the turbine section 36 form a first rotating structure 44 (e.g., a high-pressure spool) and a second rotating structure 46. The first rotating structure 44 and the second rotating structure 46 are mounted for rotation about a rotational axis 48 relative to the engine static structure 40.

The first rotating structure 44 includes a first shaft 50, a bladed compressor rotor 52 for the compressor section 32, and a bladed first turbine rotor 54 for the high-pressure turbine section. The first shaft 50 interconnects the compressor rotor 52 and the first turbine rotor 54.

The second rotating structure 46 includes a second shaft 56 and a bladed second turbine rotor 58 for the power turbine section. The first shaft 50 and the second shaft 56 are concentric and configured to rotate about the rotational axis 48. The present disclosure, however, is not limited to concentric configurations of the first shaft 50 and the second shaft 56. The second shaft 56 interconnects the second turbine rotor 58 and the drivetrain 28.

The second rotating structure 46 is coupled with the main rotor 1002 and the tail rotor 1004 (see FIG. 1) through the drivetrain 28. The drivetrain 28 is configured as a geared drivetrain, where a geartrain 60 is disposed between and operatively couples the second rotating structure 46 with the main rotor 1002 and the tail rotor 1004. The geartrain 60 of FIG. 2 includes a main rotor assembly 62 and a tail rotor assembly 64. The main rotor assembly 62 includes an input shaft 66, a main gearbox 68, and an output shaft 70. The input shaft 66 is coupled with the second shaft 56. The main gearbox 68 includes a gear assembly 72 coupling the input shaft 66 with the output shaft 70. The output shaft 70 is coupled, directly or indirectly, with the main rotor 1002. The tail rotor assembly 64 includes an input shaft 74, a tail gearbox 76, and an output shaft 78. The input shaft 74 is coupled with the second shaft 56. The tail gearbox 76 includes a gear assembly 80 coupling the input shaft 74 with the output shaft 78. The output shaft 78 is coupled, directly or indirectly, with the tail rotor 1004. The present disclosure, however, is not limited to the foregoing exemplary configuration of the drivetrain 28 of FIG. 2. For example, the drivetrain 28 may be adapted to operatively couple two engines 22 to the main rotor 1002 and the tail rotor 1004.

The engine static structure 40 includes engine cases, cowlings, bearing assemblies, fixed structures, and/or other non-rotating structures configured to form, house, and/or support (e.g., rotationally support) the gas turbine engine sections 30, 32, 34, 36, 38 and components of the gas turbine engine sections 30, 32, 34, 36, 38.

The electrical assembly 26 includes at least one electrical generator 82 and an electrical distribution system 84. The generator 82 of FIG. 2 is coupled with the gear assembly 72 of the main gearbox 68. The generator 82 is configured to be driven by rotation of the second shaft 56 through the main rotor assembly 62 (e.g., the input shaft 66 and the gear assembly 72). The generator 82 may be mounted on a gearbox housing 86 of the main gearbox 68. The electrical distribution system 84 includes switchgear, cables, wires, breakers, switches, contactors, electrical power conditional and/or conversion (e.g., AC to DC or DC to AC conversion) components, and/or other electrical components to effect the transfer of electrical power between components of the electrical assembly 26 as well as other electrical components of the aircraft 1000 and/or the propulsion system 20. For example, the electrical distribution system 84 may be configured to supply electrical power from the generator 82 to one or more electrical loads 88 of the aircraft 1000 and/or its propulsion system 20 such as, but not limited to electronic control systems, environmental control systems, lighting systems, communication systems, and the like. The electrical assembly 26 may additionally include a battery and/or other energy storage device electrically connected to the electrical distribution system 84.

Referring to FIGS. 1-3, the propulsion system 20 includes the propulsor modules 24 on stub-wings 1008 and 1010 on an exterior of the aircraft 1000. For example, the propulsion system 20 of FIG. 1 includes the first propulsor module 24A on the first sub-wing 1008 on a first side (e.g., a starboard side) of the housing 1006 and the second propulsor module 24B on the second stub-wing 1010 on a second side (e.g., a port side) of the housing 1006. Of course, the propulsor modules 24 may alternatively be mounted on other portions of the aircraft 1000 body (e.g., a fuselage section, stub wings, a tail section, etc.). Each of the propulsor modules 24 includes an exterior housing 90, an interior fixed structure 92, and an electric propulsor assembly 94.

The housing 90 includes a (e.g., tubular) housing body 96. The housing body 96 may be mounted onto an exterior of the aircraft 1000, for example, the stub-wings 1008 and 1010. The housing body 96 extends along an axis 98 of the propulsor module 24 between and to a first axial end 100 (e.g., a forward axial end) and a second axial end 102 (e.g., an aft axial end). The housing body 96 includes an interior surface 104 extending circumferentially about (e.g., completely around) the axis 98. The interior surface 104 forms and circumscribes a propulsor duct 106 through the housing 90 from the first axial end 100 to the second axial end 102. The housing body 96 (e.g., the interior surface 104) forms an inlet 108 of the propulsor duct 106 at the first axial end 100. The housing body 96 (e.g., the interior surface 104) forms an outlet 110 of the propulsor duct 106 at the second axial end 102.

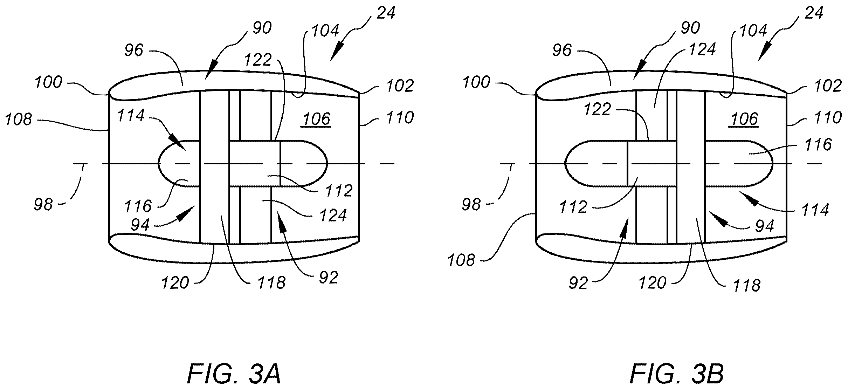

The propulsor assembly 94 includes an electric motor 112 and a bladed propulsor 114 (e.g., a bladed fan rotor). The electric motor 112 is mounted within the propulsor duct 106, for example, at the axis 98. The electric motor 112 is disposed axially between the inlet 108 and the outlet 110. The electric motor 112 is electrically connected with the electrical distribution system 84. The propulsor 114 is mechanically coupled with the electric motor 112 and configured to be driven by the electric motor 112 to rotate about the axis 98. The propulsor 114 includes a center body 116 and a plurality of blades 118. The center body 116 is disposed on the axis 98 and coupled with the electric motor 112. The blades 118 each project radially outward from the center body 116 to respective distal tip ends 120 disposed at the interior surface 104. The blades 118 are arranged on the center body 116 as a circumferential array and may be equispaced about the axis 98. The propulsor assembly 94 may be arranged with a tractor configuration or a pusher configuration. For example, the propulsor assembly 94 of FIG. 3A, having a tractor configuration, is arranged with the propulsor 114 disposed upstream of the fixed structure 92 (e.g., axially between the inlet 108 and the fixed structure 92). In contrast, the propulsor assembly 94 of FIG. 3B, having a pusher configuration, is arranged with the propulsor 114 disposed downstream of the fixed structure 92 (e.g., axially between the outlet 110 and the fixed structure 92).

The fixed structure 92 includes a center body 122 and a plurality of struts 124. The center body 122 is disposed about the axis 98. The electric motor 112 is (e.g., fixedly) mounted onto (e.g., within) the center body 122 such that the fixed structure 92 supports the propulsor assembly 94 within the housing 90. For example, the center body 122 may form an exterior aerodynamic housing of the electric motor 112. The struts 124 extend radially between and connect the center body 122 and the housing 90 (e.g., the interior surface 104). The struts 124 are arranged on the center body 122 as a circumferential array and may be equispaced about the axis 98.

During operation of the aircraft 1000 and its propulsion system 20, ambient air is directed into the compressor section 32 through the air intake section 30. The air is compressed in the compressor section 32 by the compressor rotor 52 and directed into a combustion chamber of the combustor 42. Fuel is injected into the combustion chamber and mixed with the compressed air to provide a fuel-air mixture. This fuel-air mixture is ignited, and combustion products thereof flow through and sequentially cause the first turbine rotor 54 and the second turbine rotor 58 to rotate. The rotation of the first turbine rotor 54 and the second turbine rotor 58 respectively drives rotation of the first rotating structure 44 and the second rotating structure 46. The second rotating structure 46 (e.g., the power turbine) drives rotation of the main rotor 1002 and the tail rotor 1004 through the drivetrain 28. The combustion products (e.g., gases) exiting the turbine section 36 are exhausted from the gas turbine engine 22 through the exhaust section 38.

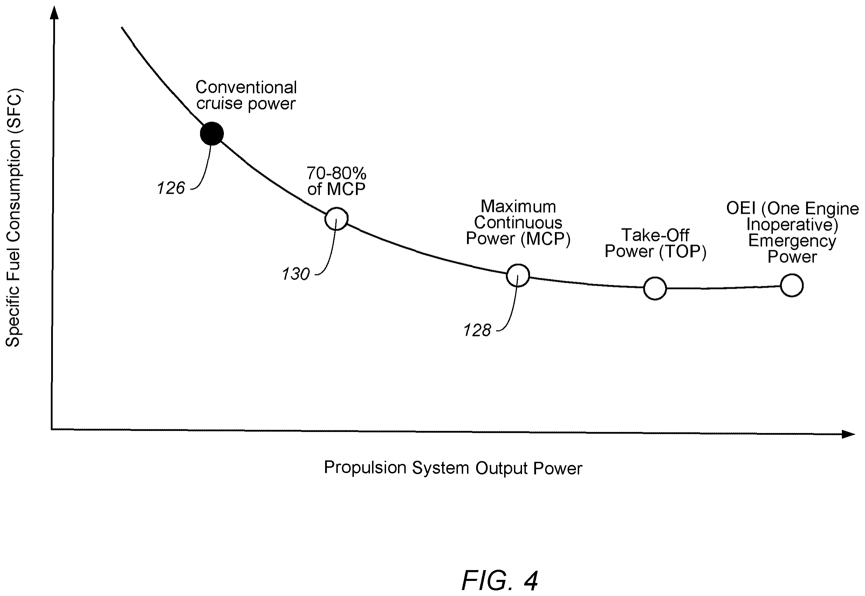

The second rotating structure 46 additionally drives the generator 82 through the drivetrain 28 (e.g., the main gearbox 68) to generate electrical power for the electric motor 112 of each of the propulsor modules 24. The electric motor 112 drives rotation of the propulsor 114 to generate horizontal thrust from the propulsor modules 24 to increase aircraft 1000 speed. A benefit of this approach is to operate the gas turbine engine 22 (or gas turbine engines 22 for multi-engine aircraft) at a higher power during cruise flight modes where specific fuel consumption may be lower, thereby facilitating reduced mission fuel burn and/or longer flight range. FIG. 4 illustrates an exemplary graph of gas turbine engine(s) output power for a helicopter propulsion system vs. specific fuel consumption (SFC). Compared to a conventional helicopter which may operate at a conventional cruise output power 126 of approximately 40 percent to approximately 60 percent of a maximum continuous power (MCP) 128, the present disclosure propulsion system 20 facilitates operation of the gas turbine engine(s) 22 at a higher cruise output power 130, for example, between approximately 70 percent and approximately 80 percent of the MCP 128. This approach of the present disclosure may additionally avoid the need to have other thermal engines to drive aircraft side thrusters, thereby reducing cost (e.g., acquisition, operating, maintenance), weight, and/or powerplant complexity.

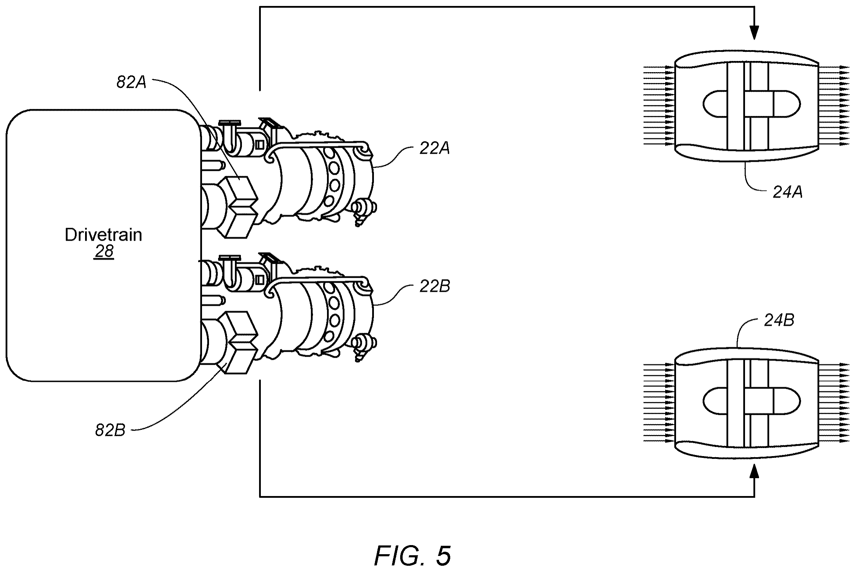

FIG. 5 schematically illustrates a first generator mounting configuration for a dual-engine propulsion system. A first engine 22A (e.g., a first turboshaft engine) and a second engine 22B (e.g., a second turboshaft engine) are configured to mechanically drive rotation of the main rotor 1002 and the tail rotor 1004 (see FIG. 1) via mechanical coupling through the drivetrain 28. For example, the first engine 22A and the second engine 22B may each be coupled to the drivetrain 28 in a manner similar to that shown with respect to the engine 22 in FIG. 2 (e.g., via respective shafts 56). A first generator 82A and a second generator 82B are coupled with the gear assembly 72 of the main gearbox 68, as described above with respect to the generator 82 in FIG. 2. Additionally, the first generator 82A and the second generator 82B may be mounted on the gearbox housing 86 of the main gearbox 68. The present disclosure is not limited to a particular manner of mounting the first generator 82A and the second generator 82B on the gearbox housing 86.

The first engine 22A is sized such that it is capable of driving the first generator 82A (in addition to the main rotor 1002 and the tail rotor 1004) to provide electrical power to the first propulsor module 24A. The second engine 22B is sized such that it is capable of driving the second generator 82B (in addition to the main rotor 1002 and the tail rotor 1004) to provide electrical power to the second propulsor module 24B. The present disclosure is not limited to a particular configuration of the propulsor assembly 94 of the first and second propulsor modules 24A and 24B. For example, the propulsor assembly 94 may be arranged with a tractor configuration or a pusher configuration.

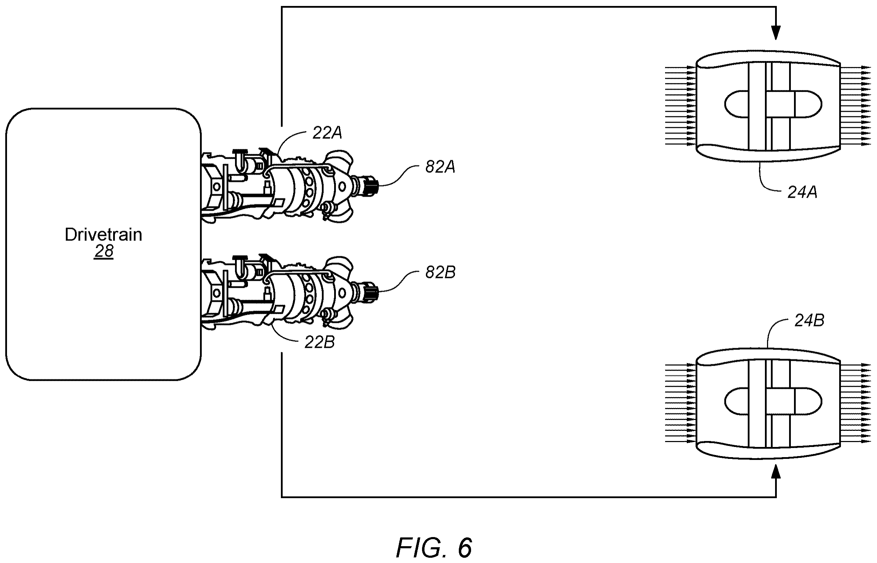

FIG. 6 schematically illustrates a second generator mounting configuration for a dual-engine propulsion system. The first engine 22A (e.g., a first turboshaft engine) and the second engine 22B (e.g., a second turboshaft engine) are configured to mechanically drive rotation of the main rotor 1002 and the tail rotor 1004 (see FIG. 1) via mechanical coupling through the drivetrain 28 (see FIG. 2). The first generator 82A is mounted at the exhaust section 38 of the first engine 22A. The second generator 82B is mounted at the exhaust section 38 of the second engine 22B, and mechanically coupled to the respective second shafts 56. The present disclosure is not limited to a particular manner of mounting the first generator 82A and the second generator 82B at the exhaust section 38.

The first engine 22A is sized such that it is capable of driving the first generator 82A(in addition to the main rotor 1002 and the tail rotor 1004) to provide electrical power to the first propulsor module 24A. The second engine 22B is sized such that it is capable of driving the second generator 82B (in addition to the main rotor 1002 and the tail rotor 1004) to provide electrical power to the second propulsor module 24B. The present disclosure is not limited to a particular configuration of the propulsor assembly 94 of the first and second propulsor modules 24A and 24B. For example, the propulsor assembly 94 may be arranged with a tractor configuration or a pusher configuration.

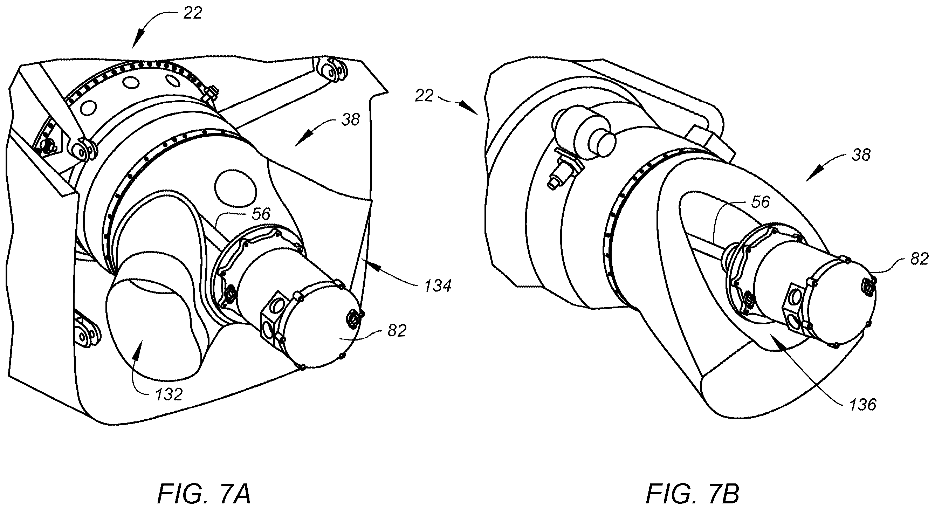

FIG. 7A schematically illustrates a first exhaust mounted generator configuration. Specifically, FIG. 7A illustrates a twin-port exhaust in which the generator 82 is mounted to the second shaft 56 (e.g., the power turbine shaft) at the exhaust section 38 (see FIG. 2). A first exhaust port 132 and a second exhaust port 134 of a pair of exhaust ports are disposed on opposing lateral sides of the generator 82 and the aircraft 1000. The present disclosure is not limited to this particular configuration or orientation of the exhaust ports.

FIG. 7B schematically illustrates a second exhaust mounted generator configuration. Specifically, FIG. 7B illustrates a single-port exhaust in which the generator 82 is mounted to the second shaft 56 (e.g., the power turbine shaft) within the exhaust section 38 (see FIG. 2). The present disclosure is not limited to a particular orientation of a single exhaust port 136. The single exhaust port 136 may be oriented to facilitate the first engine 22A and the second engine 22B. For example, the respective exhaust ports 136 of the first and second engines 22A and 22B may be directed in the same vertical direction (upward or downward), or may be directed in laterally opposing directions away from the center of the aircraft 1000.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A propulsion system for an aircraft, the propulsion system comprising:
a propulsion rotor;
at least one engine mechanically coupled to the propulsion rotor via a geartrain;
a first propulsor module comprising a first housing, a first electric motor, and a first bladed propulsor, wherein the first bladed propulsor is coupled with the first electric motor within the first housing;
a second propulsor module comprising a second housing, a second electric motor, and a second bladed propulsor, wherein the second bladed propulsor is coupled with the second electric motor within the second housing;
a first generator driven by the at least one engine and electrically connected with the first electric motor; and
a second generator driven by the at least one engine and electrically connected with the second electric motor.

2. The propulsion system of claim 1, wherein the first housing forms a first propulsor duct comprising a first duct inlet and a first duct outlet, and the second housing forms a second propulsor duct comprising a second duct inlet and a second duct outlet.

3. The propulsion system of claim 1 or 2, wherein the at least one engine comprises a first engine coupled to the geartrain via a first shaft and a second engine coupled to the geartrain via a second shaft.

4. The propulsion system of claim 3, wherein the first engine drives the first generator and the second engine drives the second generator.

5. The propulsion system of claim 3 or 4, wherein the first generator and the second generator are coupled to a gear assembly of the geartrain.

6. The propulsion system of claim 5, wherein the first generator and the second generator are mounted on a gearbox housing of the gear assembly.

7. The propulsion system of any of claims 3 to 6, wherein the first generator is mounted to the first shaft of the first engine, and the second generator is mounted to the second shaft of the second engine.

8. A propulsion system for an aircraft, the propulsion system comprising:
a propulsion rotor;
a first engine mechanically coupled to the propulsion rotor via a geartrain;
a second engine mechanically coupled to the propulsion rotor via the geartrain;
a first propulsor module comprising a first bladed propulsor and a first electric motor, wherein the first bladed propulsor is coupled to the first electric motor;
a second propulsor module comprising a second bladed propulsor and a second electric motor, wherein the second bladed propulsor is coupled to the second electric motor;
a first generator driven by the first engine and electrically connected with the first electric motor; and
a second generator driven by the second engine and electrically connected with the second electric motor,
optionally wherein:
the first generator and the second generator are coupled to a gear assembly of the geartrain; and
the first generator and the second generator are mounted on a gearbox housing of the gear assembly.

9. The propulsion system of claim 8, wherein:
the first propulsor module further comprises a first housing that forms a first propulsor duct comprising a first duct inlet and a first duct outlet, wherein the first bladed propulsor and the first electric motor are disposed within the first propulsor duct; and
the second propulsor module further comprises a second housing that forms a second propulsor duct comprising a second duct inlet and a second duct outlet, wherein the second bladed propulsor and the second electric motor are disposed with in the second propulsor duct.

10. The propulsion system of claim 8 or 9, wherein the first engine is coupled to the geartrain via a first shaft and the second engine is coupled to the geartrain via a second shaft.

11. The propulsion system of any of claims 3 to 10, wherein:
the first engine comprises a first exhaust section, and the second engine comprises a second exhaust section; and
the first generator is mounted to the first shaft at the first exhaust section, and the second generator is mounted to the second shaft at the second exhaust section.

12. The propulsion system of claim 11, wherein:
the first exhaust section comprises a first pair of exhaust ports disposed on opposing lateral sides of the first generator; and
the second exhaust section comprises a second pair of exhaust ports disposed on opposing lateral sides of the second generator.

13. The propulsion system of claim 11, wherein:
the first exhaust section comprises a first exhaust port, and the first generator is disposed within the first exhaust port; and
the second exhaust section comprises a second exhaust port, and the second generator is disposed within the second exhaust port.

14. The propulsion system of claim 13, wherein:
the first exhaust port and the second exhaust port are oriented in a same vertical direction, or
the first exhaust port and the second exhaust port are oriented in opposing lateral directions.

15. A propulsion system for an aircraft, the propulsion system comprising:
a propulsion rotor;
a first engine and a second engine mechanically coupled to the propulsion rotor;
a first ducted propulsor module disposed on a first wing of the aircraft;
a second ducted propulsor module disposed on a second wing of the aircraft, wherein the first wing and the second wing are disposed on opposing sides of the aircraft;
a first generator driven by the first engine and electrically connected with the first ducted propulsor module; and
a second generator driven by the second engine and electrically connected with the second ducted propulsor module.
